# FASCICULE DE BREVET EUROPEEN

(11) **EP 3 992 822 B1**
(45) Date de publication et mention de la délivrance du brevet: **11.06.2025**
(21) Numéro de dépôt: 21205662.6
(22) Date de dépôt: 29.10.2021
(51) Int. Cl.: H04L 9/40, G06F 21/30, H04L 9/32, H04W 12/06

(54) **PROCÉDÉ DE PROTECTION, PRODUIT-PROGRAMME D'ORDINATEUR ET SYSTÈMES ASSOCIÉS**
SCHUTZVERFAHREN, ENTSPRECHENDES COMPUTERPROGRAMMPRODUKT UND ENTSPRECHENDE SYSTEME
PROTECTION METHOD, ASSOCIATED COMPUTER PROGRAM PRODUCT AND SYSTEMS

(30) Priorité: 02.11.2020 FR 2011213
(43) Date de publication de la demande: 04.05.2022
(73) Titulaire: Schneider Electric Industries SAS, 92500 Rueil-Malmaison (FR)
(72) Inventeur: MEURANT, Olivier, 38400 SAINT-MARTIN-D'HÈRES (FR); AUBERT, Florent, 38920 CROLLES (FR)
(74) Mandataire: Lavoix

(56) Documents cités:
- US-A1- 2009 158 051
- US-A1- 2011 184 585
- US-A1- 2013 036 311
- US-A1- 2017 180 137
- SEO JUNG TAEK: "Towards the advanced security architecture for Microgrid systems and applications", JOURNAL OF SUPERCOMPUTING, KLUWER ACADEMIC PUBLISHERS, DORDRECHT, NL, vol. 72, no. 9, 21 June 2016 (2016-06-21), pages 3535 - 3548, XP036042979, ISSN: 0920-8542, [retrieved on 20160621], DOI: 10.1007/S11227-016-1786-8

## Description

La présente description se rapporte aux réseaux de distribution d'électricité, tels que les micro-réseaux (nommés « microgrids » en langue anglaise).

L'invention n'est cependant pas limitée au seul cas des micro-réseaux et pourrait être avantageusement appliquée dans des dispositifs de commande d'autres types d'installations industrielles.

Les micro-réseaux sont généralement utilisés dans des bâtiments résidentiels, commerciaux ou industriels, voire dans des groupes de bâtiments, pour produire et stocker localement de l'électricité, tout en pouvant par ailleurs être reliés à un réseau public de distribution d'électricité.

Les micro-réseaux facilitent l'utilisation de sources d'énergie distribuée, et plus particulièrement l'utilisation de sources d'énergie renouvelable, telles que des éoliennes, des hydroliennes ou des panneaux photovoltaïques. Les micro-réseaux peuvent également comporter des dispositifs de stockage d'énergie, tels que des batteries, et peuvent aussi accommoder des charges électriques dynamiques et réversibles, telles que des véhicules automobiles électriques connectés à une borne de recharge. Les micro-réseaux peuvent avantageusement être utilisés pour assurer une alimentation en électricité stable et continue lorsque le réseau public n'est pas assez fiable.

Typiquement, un système de commande permet de piloter et d'automatiser le fonctionnement du micro-réseau, par exemple pour connecter ou déconnecter des charges et/ou des sources d'alimentation électrique, par exemple en réponse à l'apparition d'un défaut électrique, ou en fonction de l'évolution de la demande en énergie et/ou en fonction de la disponibilité des sources d'alimentation, ou encore lorsque le micro-réseau se trouve déconnecté du réseau principal.

Ce pilotage est généralement effectué grâce à un automate programmable industriel (« programmable logic controller » en anglais) connecté à divers éléments du micro-réseau, tels que des appareils de protection électrique, des appareils de commutation, avec des sources d'alimentation et/ou des charges électriques, ou d'autres équipements électriques ou industriels. Cette connexion est par exemple réalisée au moyen d'une liaison de communication, telle qu'un bus de données industriel ou qu'un réseau local, ou des liaisons point à point.

Pour ce faire, l'automate industriel est programmé pour effectuer de nombreuses tâches nécessaires au bon fonctionnement de l'installation surveillée. La programmation de l'automate industriel est généralement réalisée par un installateur, à partir de bibliothèques logicielles fournies par un éditeur de logiciels et/ou par le fabricant de l'automate industriel.

Ces bibliothèques logicielles contiennent des fonctions logicielles prédéfinies, et le plus souvent déjà compilées, sur lesquelles l'installateur peut s'appuyer pour préparer un programme informatique adapté aux besoins du client final et aux spécificités du micro-réseau supervisé par l'automate.

Cependant, pour des raisons de sécurité, il est apparu souhaitable d'empêcher l'installateur de dupliquer sans autorisation certaines fonctions contenues dans les bibliothèques logicielles fournies et de les utiliser dans d'autres automates.

Cela est notamment le cas de fonctions se rapportant à des fonctionnalités critiques de l'automate qui, si elles venaient à être utilisées de façon non adéquate ou sans autorisation du fabriquant, pourraient avoir des conséquences adverses, voire même nuire au bon fonctionnement de l'installation surveillée.

Le document US 2017/0180137 A1 décrit un système de sécurisation d'un dispositif électronique intelligent.

Le document US 2013/0036311 A1 décrit des systèmes de supervision et utilisation de données dans un micro-réseau électrique.

Il existe donc un besoin pour des procédés et des systèmes capables d'empêcher l'utilisation non autorisée de certaines fonctions logicielles dans un contrôleur électronique, et notamment dans un automate industriel d'une installation électrique.

A cet effet, selon un aspect de l'invention, un procédé pour protéger l'exécution d'un module logiciel, ce module logiciel comportant au moins une fonction protégée, ce procédé étant mis en œuvre par le module logiciel dans un contrôleur électronique suite à une requête du contrôleur électronique visant à exécuter ladite au moins une fonction protégée, ce procédé comprenant :
- obtenir un identifiant numérique du contrôleur électronique ;
- calculer, au moyen d'une fonction de calcul contenue dans le module logiciel, une signature numérique à partir de l'identifiant numérique obtenu ;
- comparer la signature numérique calculée avec une signature prédéfinie stockée dans le module logiciel, la signature numérique prédéfinie ayant été préalablement insérée lors de la création du module logiciel à partir de l'identifiant numérique du contrôleur industriel et au moyen d'une fonction de calcul analogue à celle contenue dans le module logiciel ;
- autoriser l'exécution de la fonction protégée si la signature numérique calculée correspond à la signature numérique prédéfinie, et refuser l'exécution de la fonction protégée si la signature numérique calculée ne correspond pas à la signature numérique prédéfinie.

Selon des aspects avantageux mais non obligatoires, un tel procédé peut incorporer une ou plusieurs des caractéristiques suivantes, prises isolément ou suivant toute combinaison techniquement admissible :
- le paramètre additionnel est une durée de fonctionnement, et la valeur de référence du paramètre additionnel est une durée maximale de fonctionnement.
- le procédé comporte une phase d'inhibition temporaire, postérieure au démarrage du contrôleur électronique, pendant laquelle l'exécution de la fonction protégée est autorisée même si la signature numérique calculée ne correspond pas à la signature numérique prédéfinie.
- l'identifiant numérique du contrôleur électronique est obtenu au moyen d'une fonction système fournie par le contrôleur électronique.
- l'identifiant numérique comporte un identifiant matériel, tel qu'un numéro de série, qui identifie de façon unique le contrôleur électronique.
- la fonction de calcul est une fonction de hachage.
- le contrôleur électronique est un automate industriel programmable.

Selon un autre aspect, un procédé pour générer un module logiciel destiné à être déployé sur un contrôleur électronique cible, ce procédé comportant :
- acquérir un identifiant numérique du contrôleur électronique,
- calculer une signature numérique à partir de l'identifiant numérique obtenu, le calcul étant effectué au moyen d'une fonction de calcul ;
- enregistrer la signature numérique dans le module logiciel ;
- enregistrer, dans le module logiciel, du code logiciel configuré pour, lorsqu'exécuté par un processeur du contrôleur électronique cible, conduire le processeur à mettre en œuvre un procédé tel que précédemment décrit.

Selon un autre aspect, un module logiciel, tel qu'un programme produit d'ordinateur, comporte du code logiciel configuré pour, lorsqu'exécuté par processeur d'un contrôleur électronique, mettre en œuvre des étapes comprenant :
- obtenir un identifiant numérique du contrôleur électronique ;
- calculer une signature numérique à partir de l'identifiant numérique obtenu, au moyen d'une fonction de calcul contenue dans le module logiciel ;
- comparer la signature numérique calculée avec une signature prédéfinie stockée dans le module logiciel ;
- autoriser l'exécution de la fonction protégée si la signature numérique calculée correspond à la signature numérique prédéfinie, et refuser l'exécution de la fonction protégée si la signature numérique calculée ne correspond pas à la signature numérique prédéfinie.

Selon un autre aspect, une installation de distribution électrique, notamment un micro-réseau de distribution d'électricité, comprend un contrôleur électronique comportant un processeur et un module logiciel tel que précédemment décrit.

Selon un autre aspect, un système pour générer un module logiciel destiné à être déployé sur un contrôleur électronique cible est configuré pour mettre en œuvre un procédé comportant :
- acquérir un identifiant numérique du contrôleur électronique,
- calculer une signature à partir de l'identifiant numérique obtenu, le calcul étant effectué au moyen d'une fonction de calcul ;
- enregistrer la signature dans le module logiciel ;
- enregistrer, dans le module logiciel, du code logiciel tel que défini précédemment.

L'invention sera mieux comprise et d'autres avantages de celle-ci apparaîtront plus clairement à la lumière de la description qui va suivre d'un mode de réalisation d'un tel procédé donnée uniquement à titre d'exemple et faite en référence aux dessins annexés, dans lesquels :
[Fig 1] la figure 1 est une représentation schématique d'un exemple d'installation de distribution électrique ;
[Fig 2] la figure 2 est un diagramme simplifié d'un module logiciel utilisé par un dispositif de commande de l'installation de distribution électrique de la figure 1 ;
[Fig 3] la figure 3 est un diagramme d'une implémentation d'un procédé de création d'un module logiciel, tel que le module logiciel de la figure 2 ;
[Fig 4] la figure 4 est un diagramme d'un exemple d'une implémentation d'un procédé de protection d'une fonction d'un module logiciel, tel que le module logiciel de la figure 2.

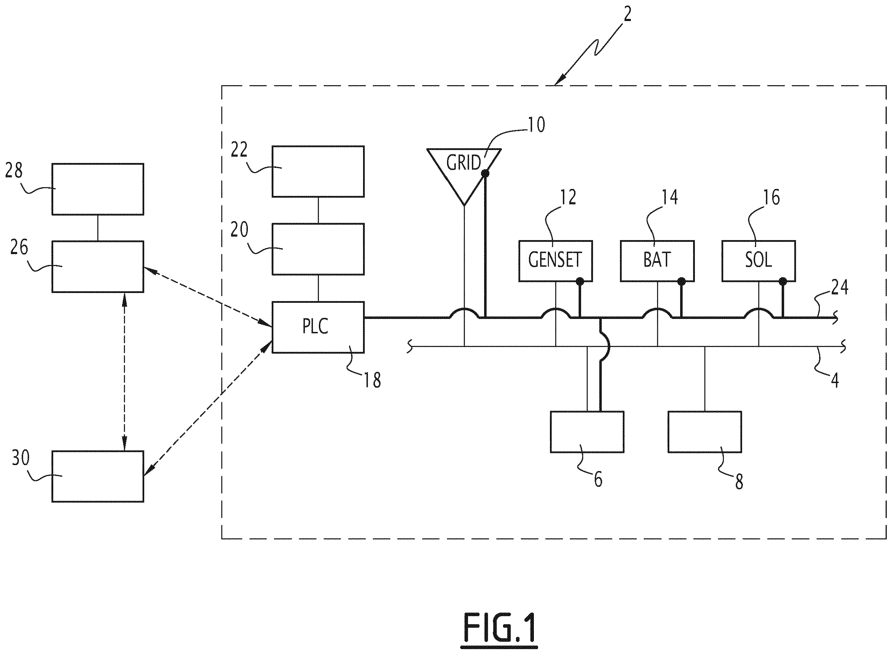

Un exemple d'une installation de distribution d'électricité 2 est illustré sur la figure 1.

Dans cet exemple, l'installation 2 est un micro-réseau de distribution d'électricité (« microgrid » en anglais), mais on conçoit qu'en variante, l'installation 2 pourrait être de nature différente. Il pourrait, par exemple, s'agit d'une installation de distribution d'électricité classique, ou d'une installation industrielle. Dans ce cas, les modes de réalisation décrits ci-dessous peuvent être transposés à une telle installation.

Dans de nombreux modes de réalisation, le micro-réseau 2 est une installation de distribution d'électricité, comprenant des conducteurs électriques 4 qui permettent de connecter des charges électriques 6, 8 et des sources d'énergie électrique locales.

Par exemple, les charges électriques 6, 8 et les sources d'énergie électrique comportent des entrées et/ou des sorties de puissance électrique qui sont raccordées à un ou à plusieurs des conducteurs électriques 4, de préférence par l'intermédiaire d'interfaces de connexion comprenant un ou plusieurs appareils électriques de commutation et/ou un ou plusieurs appareils de protection électrique.

Selon divers modes de réalisation, le micro-réseau 2 peut être utilisé pour distribuer des courants électriques continus, ou des courants électriques alternatifs. Selon les cas, les courants électriques distribués peuvent être monophasés ou polyphasés.

Dans de nombreux cas, les charges 6, 8 peuvent être classées en deux catégories : un premier groupe correspondant à des charges électriques dynamiques ou réversibles 6, qui peuvent être pilotées pouvant être déconnectées sur demande, par exemple à la demande du micro-réseau 2, et un deuxième groupe correspondant à des charges électriques 8 ne pouvant pas être déconnectées à la demande et/ou devant rester alimentées en permanence par le micro-réseau 2.

Toutefois, cette distinction peut être omise dans certains modes de réalisation. Le micro-réseau 2 pourrait, en variante, comporter des charges électriques d'un seul des deux types présentés ci-dessus.

Dans de nombreux modes de réalisation, le micro-réseau 2 peut être connecté à un réseau 10 de distribution d'électricité (noté « GRID » sur la figure 1, et nommé « réseau principal » dans ce qui suit) pouvant être un réseau public.

De préférence, le micro-réseau 2 peut être sélectivement connecté au réseau 10 ou déconnecté du réseau 10, par exemple au moyen d'appareils de commutation électrique pilotables à distance.

Dans de nombreux modes de réalisation, les sources d'énergie connectées au micro-réseau 2 sont aptes à générer de l'électricité, ou à restituer de l'énergie électrique stockée, ou à convertir de l'énergie électrique à partir d'une autre source d'énergie, et peuvent être actives de façon continue ou par intermittence selon leur nature. En pratique, ces sources d'énergie électrique permettent une production d'électricité décentralisée.

Dans l'exemple illustré, qui est donné avant tout à des fins d'explication et qui n'a pas vocation à limiter la demande à ce seul mode de réalisation, le micro-réseau 2 comporte un générateur classique 12 (noté « GENSET » sur la figure 1), un dispositif de stockage d'énergie 14 (noté « STOR ») et une source d'énergie renouvelable 16 (noté « SOL »).

Le générateur classique 12 peut, par exemple, être un groupe électrogène, ou un générateur comportant une turbine à gaz, ou une pile à combustible.

Le dispositif de stockage 14 peut comporter une batterie, par exemple une batterie d'accumulateurs électrochimiques, et/ou d'autres moyens de stockage d'électricité, tels que des batteries de super-condensateurs, ou des dispositifs de stockage d'énergie cinétique, tels que des volants tournants (« flywheel » en anglais).

La source d'énergie renouvelable 16 peut, par exemple, comporter un panneau solaire, ce panneau solaire pouvant être associé à un onduleur ou à tout équipement de conversion électrique approprié.

En variante, les sources d'énergie pourraient inclure d'autres moyens de génération d'électricité basés sur des énergies dites renouvelables, tels que des aérogénérateurs éoliens, ou des chaudières à biomasse, ou des générateurs alimentés par géothermie, ou des turbines hydrauliques, ou tout moyen approprié.

On conçoit aisément qu'en pratique, le nombre et la nature des sources électriques du micro-réseau 2 pourraient être différentes de celles ici décrites, tant par leur nature que par leur nombre ou leur agencement dans le micro-réseau 2.

Dans de nombreuses implémentations, en fonction des circonstances, le micro-réseau 2 peut être piloté pour qu'au moins une partie de l'énergie électrique produite par les sources locales soit transmise vers le réseau 10.

Lorsque nécessaire, le micro-réseau 2 peut aussi être piloté pour que de l'énergie électrique en provenance du réseau 10 soit utilisée pour alimenter tout ou partie des charges électriques 6, 8, par exemple lorsque la production d'électricité au sein du micro-réseau 2 par les sources locales est insuffisante pour répondre à la demande locale.

Dans de nombreux modes de réalisation, le micro-réseau 2 comprend également des appareils électriques permettant de gérer et réguler la puissance électrique circulant dans le micro-réseau 2, tels que des appareils de protection électrique, et/ou des appareils de commutation, et/ou des convertisseurs de puissance.

Le micro-réseau 2 peut également comporter des capteurs et/ou des appareils de mesure configurés pour mesurer des grandeurs électriques (tensions électriques, intensités, puissances électriques actives et réactives, etc.) ou des grandeurs environnementales (température, humidité, etc.).

Ces appareils de commutation, de même que les charges et les sources électriques, peuvent être pilotés pour assurer la stabilité (en fréquence et/ou en tension) du micro-réseau 2. Par exemple, en fonction de conditions de fonctionnement mesurées et/ou de politiques de fonctionnement imposées, des consignes peuvent être envoyées aux équipements, par exemple pour faire varier la puissance électrique consommée ou la puissance électrique produite, ou pour faire varier une puissance électrique réactive.

En outre, le micro-réseau 2 peut être configuré pour détecter l'apparition d'un défaut électrique et, en réponse, déconnecter tout ou partie des sources d'alimentation électrique et/ou des charges électriques afin de protéger l'installation et/ou pour permettre d'isoler le défaut et/ou de localiser l'origine du défaut.

De manière générale, le micro-réseau 12 comporte un système de commande comprenant au moins un contrôleur électronique 18, tel qu'un automate industriel programmable (en anglais, « programmable logic controller », ou PLC).

Par exemple, le système de commande comporte aussi un terminal utilisateur 20 connecté au contrôleur 18 et comprenant une interface utilisateur 22.

Dans de nombreux modes de réalisation, le terminal utilisateur 20 est un ordinateur, tel qu'un ordinateur industriel ou une station de travail.

L'interface utilisateur 22 est par exemple capable d'afficher une interface graphique et peut comporter des instruments de saisie de données tels qu'un clavier, un pointeur, un écran tactile, une souris, ou tout élément équivalent.

L'interface utilisateur 22 peut également comporter un ou plusieurs dispositifs d'acquisition de données, tel qu'un lecteur de disque, ou un connecteur filaire, ou une interface de communication sans fil, permettant de télécharger des données depuis un autre appareil local, tel qu'un appareil mobile porté par l'opérateur.

Le dispositif de commande électronique (et plus particulièrement le contrôleur 18) est connecté à au moins une partie des équipements électriques du micro-réseau 2 par l'intermédiaire d'une liaison de communications 24.

La liaison de communications 24 peut comporter un réseau filaire, ou un bus de données, notamment un bus de données industriel, ou une pluralité de liaisons point à point, ou encore des liaisons sans fil.

Selon un exemple donné à des fins d'illustration, la liaison de communication 24 peut comporter un bus de données Modbus, d'autres alternatives pouvant toutefois être utilisées en variante.

En pratique, la liaison de communication 24 peut être utilisée par le contrôleur 18 pour envoyer des ordres visant à connecter ou déconnecter certains équipements du micro-réseau 2.

La liaison 24 peut aussi être utilisée pour transmettre vers le contrôleur 18 des données mesurées par des capteurs, ou des données générées par les équipements connectés et étant relatives à des grandeurs électriques mesurées et/ou des informations sur l'état interne d'équipements du micro-réseau 2.

Selon des modes de mise en œuvre, le contrôleur 18 comporte un processeur, telle qu'un microcontrôleur programmable ou un microprocesseur, et une mémoire formant un support d'enregistrement de données lisible par ordinateur.

Par exemple, la mémoire est une mémoire à lecture seule (ROM), ou une mémoire vive (RAM), ou une mémoire non volatile de type EPROM, ou EEPROM, ou FLASH, ou NVRAM, ou équivalent, ou un support d'enregistrement optique ou magnétique, ou toute technologie appropriée.

La mémoire comporte ici des instructions exécutables ou des modules de code logiciel, qui sont de préférence conçus pour permettre au micro-réseau 2 de réaliser des opérations nécessaires à son fonctionnement, et notamment pour mettre en œuvre des procédés tel que décrits dans les exemples qui suivent lorsque ces instructions sont exécutées par le processeur.

Dans de nombreux modes de réalisation, les instructions exécutables ou les modules de code logiciel sont compatibles avec la norme IEC 61131, partie 3.

L'emploi du terme « processeur » ne fait pas obstacle à ce que, en variante, au moins une partie des fonctions du contrôleur 18 soient réalisées par un processeur de traitement du signal (DSP), ou un composant logique reprogrammable (FPGA), ou un circuit intégré spécialisé (ASIC), ou tout élément équivalent.

Le dispositif de commande (et notamment le contrôleur 18) peut comporter une interface de communication permettant d'être en communication, par exemple au travers d'un réseau informatique tel qu'internet, avec un terminal informatique 26 distant, tel qu'un ordinateur, ou une station de travail, ou un dispositif de communication mobile tel qu'une tablette numérique, ou tout dispositif équivalent, ce terminal 26 pouvant être utilisé pour configurer le micro-réseau ou le superviser à distance.

Le terminal 26 peut comporter une interface utilisateur 28, par exemple analogue à l'interface utilisateur 22, en étant capable d'afficher une interface graphique et pouvant comporter des instruments de saisie de données et/ou d'acquisition de données.

Le dispositif de commande (et notamment le contrôleur 18), de même que le terminal 26, peuvent également être en communication avec un serveur informatique distant 30, là encore, par exemple, au travers d'un réseau informatique tel qu'internet.

Par exemple, le terminal 26 et le serveur 30 comportent chacun un ou plusieurs processeurs configurés pour mettre en œuvre tout ou partie des étapes décrites ci-après.

L'utilisation du terme « serveur informatique » n'empêche pas que, dans certains modes de réalisation, les fonctionnalités correspondantes du serveur soient implémentées par un service logiciel hébergé sur une plate-forme de type « cloud computing ».

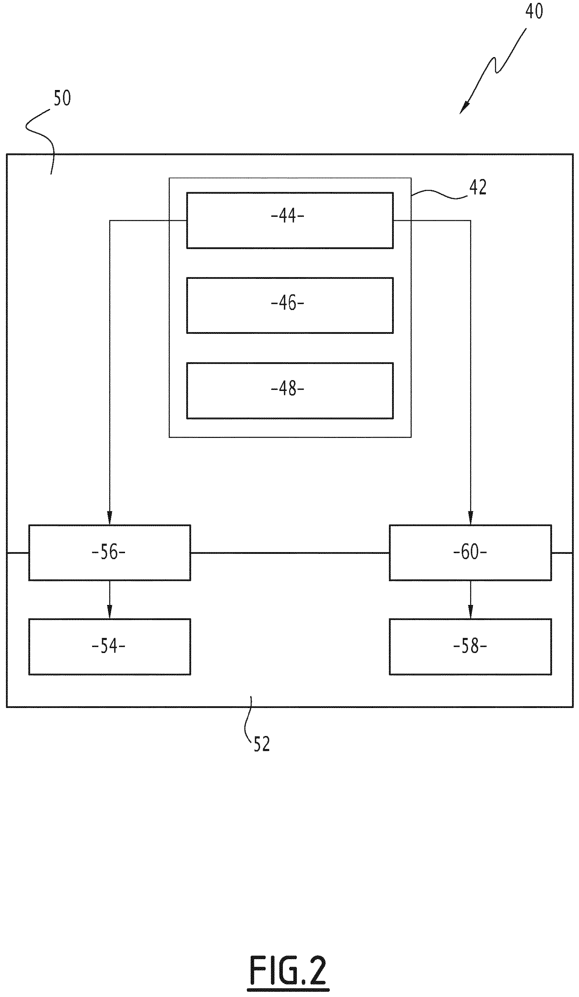

Des aspects de l'invention se rapportent plus particulièrement à des procédés permettant de sécuriser l'exécution d'une fonction contenue dans un programme logiciel exécuté par le contrôleur 18, comme illustré par les figures 2, 3 et 4.

La figure 2 représente schématiquement un environnement logiciel 40 du contrôleur 18, tel qu'un système d'exploitation, ainsi qu'un module logiciel 42.

Un module logiciel 42 est apte à être exécuté par le processeur du contrôleur 18.

En pratique, le module logiciel 42 implémente une ou plusieurs fonctionnalités ou routines pouvant être exécutées par le contrôleur 18 pour réaliser des opérations de pilotage automatique de l'installation 2, notamment pour piloter automatiquement le micro-réseau.

Par exemple, le module logiciel 42 comporte des instructions exécutables ou du code informatique compilé. De préférence, les instructions exécutables ou les modules de code logiciel sont conformes à la norme IEC 61131 - partie 3, bien que d'autres exemples soient possibles en pratique.

Selon de nombreux modes de réalisation, le module logiciel 42 comporte :
- des instructions de contrôle (bloc 44),
- des instructions pour mettre en œuvre au moins une fonction dite protégée (bloc 46), et
- une zone de stockage de données (bloc 48), pouvant par exemple comporter des valeurs d'un ou de plusieurs paramètres.

En pratique, le module logiciel 42 comporte également des instructions pour mettre en œuvre au moins une fonction non-protégée, bien que cela ne soit pas expressément représenté sur la figure 2.

Par exemple, au sens de la présente description, une « fonction protégée » désigne une ou plusieurs fonctions ou méthodes logicielles dont on souhaite qu'elles ne puissent être utilisées que par des utilisateurs qui en ont reçu l'autorisation, par exemple en ne permettant leur exécution que sur un ou plusieurs contrôleurs 18 préalablement autorisés.

Par exemple, la fonction protégée 46 peut implémenter un ou plusieurs algorithmes que l'éditeur du module logiciel 42, ou le fabriquant du contrôleur 18 ou du micro-réseau 2 ne souhaite pas divulguer ou dont la diffusion doit être restreinte, ou encore pour éviter une duplication non autorisée de ces algorithmes par un installateur ou par le client final.

Les instructions de contrôle 44 sont par exemple configurées pour restreindre l'exécution des fonctions 46, c'est-à-dire pour n'autoriser leur exécution que dans des cas autorisés, comme on le comprendra à la lecture des exemples présentés dans la suite de la description. En d'autres termes, les instructions de contrôle 44 permettent d'implémenter un mécanisme de gestion de droits numériques pour protéger l'exécution des fonctions protégées 46 et pour interdire sélectivement leur exécution dans certains cas.

De préférence, les instructions de contrôle 44 ne sont pas modifiables par un utilisateur lorsque le module logiciel 42 est chargé dans le contrôleur 18 (et notamment lorsque le module logiciel 42 est en cours d'exécution dans l'environnement 40).

Par opposition, une fonction dite non-protégé désigne ici une ou plusieurs fonctions ou méthodes logicielles qui peuvent être normalement mises en œuvre sur un contrôleur 18.

Par exemple, les fonctions protégées 46 peut se rapporter à une ou à plusieurs des fonctionnalités suivantes mises en œuvre par le contrôleur 16 pour piloter l'installation 2, notamment lorsque l'installation 2 est un micro-réseau :
- des fonctions de protection des appareils électriques ou des équipements (les charges électriques, les sources électriques, etc. ) contre l'apparition de défauts électriques ;
- des fonctions visant à assurer la stabilité du réseau (en tension et en fréquence), notamment pour assurer un équilibre entre les charges électriques et les sources électriques ;
- des fonctions visant à assurer le fonctionnement et la stabilité du micro-réseau 2 lorsqu'il est déconnecté du réseau principal 10 ;
- des fonctions visant à assurer la transition et stabilité du micro-réseau lors de la connexion du micro-réseau 2 au réseau principal 10.

Dans de nombreux modes de réalisation, l'environnement logiciel 40 est partagé entre une première zone 50, dans laquelle peuvent être exécutées des fonctions et des programmes, et une deuxième zone 52, telle qu'un noyau du système d'exploitation, qui comporte des fonctions et routines associées à des ressources logicielles et/ou des ressources matérielles qui ne sont pas directement accessible à un utilisateur ou à un programme lancé par l'utilisateur.

Par exemple, des données d'identification (bloc 54) relatives à un identifiant numérique du contrôleur 18, ici illustrées dans la zone 52, peuvent n'être accessibles par le module logiciel 42 que par l'intermédiaire d'une première fonction système 56.

Dans ce cas, les instructions de contrôle 44 comportent avantageusement des routines permettant d'appeler la première fonction système 56 afin de requérir un accès aux données d'identification 54.

Ainsi, les informations issues du module 54 ne peuvent pas être altérées par l'utilisateur ou par un programme extérieur au module logiciel 42. Cela permet d'empêcher l'utilisateur de contourner le mécanisme de protection mis en œuvre par les instructions de contrôle 44.

Dans de nombreux exemples, l'identifiant numérique (ou digital) comporte un identifiant matériel, tel qu'un numéro de série, qui identifie de façon unique le contrôleur 18. D'autres modes de réalisation sont cependant possibles.

En pratique, l'identifiant numérique peut comporter un nombre, ou une chaîne de caractères alphanumériques ou hexadécimaux, ou des symboles, ou toute représentation appropriée.

De façon optionnelle, le contrôleur 18 (ou le système 40) peut comporter un module logiciel 58 permettant de décompter une durée, par exemple une durée de fonctionnement du contrôleur 18. Le module 58 comporte par exemple une horloge ou un compteur de temps. Préférentiellement, le module 58 n'est accessible par le module logiciel 42 que par l'intermédiaire d'une deuxième fonction système 60.

Ainsi, là encore, les informations issues du module 58 ne peuvent pas être altérées par l'utilisateur ou par un programme extérieur au module logiciel 42.

Dans ce cas, les instructions de contrôle 44 peuvent avantageusement comporter des routines permettant d'appeler la deuxième fonction système 60 afin de requérir un accès aux données mesurées par le module 58, telle qu'une durée de fonctionnement du contrôleur 18.

De façon générale, le module logiciel 42, et plus particulièrement les instructions de contrôle 44, sont configurées pour, lorsqu'elles ont exécutées par le processeur du contrôleur 18, mettre en œuvre des étapes consistant à :
- obtenir un identifiant numérique du contrôleur électronique ;
- calculer une signature numérique à partir de l'identifiant numérique obtenu, au moyen d'une fonction de calcul contenue dans le module logiciel ;
- comparer la signature numérique calculée avec une signature prédéfinie stockée dans le module logiciel, la signature numérique prédéfinie ayant été préalablement insérée lors de la création du module logiciel à partir de l'identifiant numérique du contrôleur industriel et au moyen d'une fonction de calcul analogue (ou identique) à celle contenue dans le module logiciel ;
- autoriser l'exécution de la fonction protégée si la signature numérique calculée correspond à la signature numérique prédéfinie, et refuser l'exécution de la fonction protégée si la signature numérique calculée ne correspond pas à la signature numérique prédéfinie.

D'autres façon d'implémenter le système 40 et/ou le module logiciel 42 sont possibles. En particulier, plusieurs fonctions protégées analogues à la fonction protégée 46 pourraient être embarquées dans le module logiciel 42, l'accès à ces fonctions protégées pouvant être régulé par les instructions de contrôle 44, ou par des instructions de contrôle qui leurs seraient dédiées.

Dans le souci de faciliter l'exposé de l'invention, seule une fonction protégée est décrite dans ces exemples, mais les modes de réalisation décrits ci-après pour protéger l'exécution d'une fonction protégée 46 peuvent être transposés à des variantes comportant plusieurs fonctions à protéger.

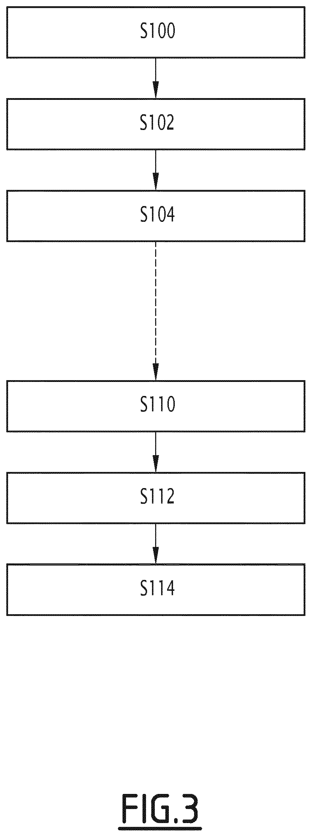

La figure 3 représente un exemple d'un procédé pour créer (ou générer) un module logiciel tel que le module logiciel 40, ce module logiciel étant destiné à être déployé sur un contrôleur électronique cible, par exemple sur le contrôleur 18.

Ce procédé est par exemple mis en œuvre préalablement à la compilation du module logiciel 42.

Le procédé de création est de préférence mis en œuvre sur le terminal 26, par exemple au moyen d'un système de configuration tel qu'un environnement de développement logiciel ou un outil de configuration en ligne, ce système pouvant être installé localement sur le terminal 26 et/ou être au moins en partie mis en œuvre par le serveur 30.

Typiquement, dans de nombreux exemples, un utilisateur peut développer un programme informatique destiné au contrôleur 18 en programmant un ou plusieurs algorithmes à partir de fonctions logicielles préalablement définies dans des bibliothèques de fonctions ou dans des interfaces de programmations avancées (API) qui peuvent être mises à disposition par un éditeur de logiciels et/ou par un fabricant du contrôleur 18.

Cela permet notamment aux utilisateurs d'adapter et de personnaliser les algorithmes de contrôle et les programmes informatiques utilisés pour piloter l'installation 2 en fonction des caractéristiques et des spécificités de cette installation 2.

Parmi les fonctions mises à disposition, le programme peut devoir utiliser des fonctions protégées. Le procédé de création du module logiciel a donc au moins en partie pour but de générer les instructions de contrôle 44 qui permettront de restreindre l'exécution des fonctions protégées 46 une fois que le module logiciel sera compilé et installé sur le contrôleur 18. On comprend donc que le module logiciel 42 peut être personnalisé en fonction du contrôleur 18 auquel il est destiné.

Lors d'une étape S100, un identifiant numérique du contrôleur électronique cible est acquis. Par exemple, l'identifiant est fourni par l'utilisateur, en le saisissant sur une interface du système ou en le chargeant depuis un support de stockage de données.

Lors d'une étape S102, une signature numérique est automatiquement calculée à partir de l'identifiant numérique fourni. Le calcul de la signature numérique est effectué au moyen d'une fonction de calcul prédéfinie, par exemple au sein du terminal 26 ou du serveur 30. Par exemple, la fonction de calcul fait partie du système de développement.

Dans des modes de réalisation préférés, la fonction de calcul est une fonction de hachage. D'autres implémentations peuvent cependant être prévues en variante.

Lors d'une étape S104, la signature numérique peut être enregistrée dans le module logiciel, par exemple dans la zone de stockage 48 (ou dans une zone de stockage temporaire qui deviendra la zone de stockage 48 une fois que le module logiciel 42 aura fini d'être compilé).

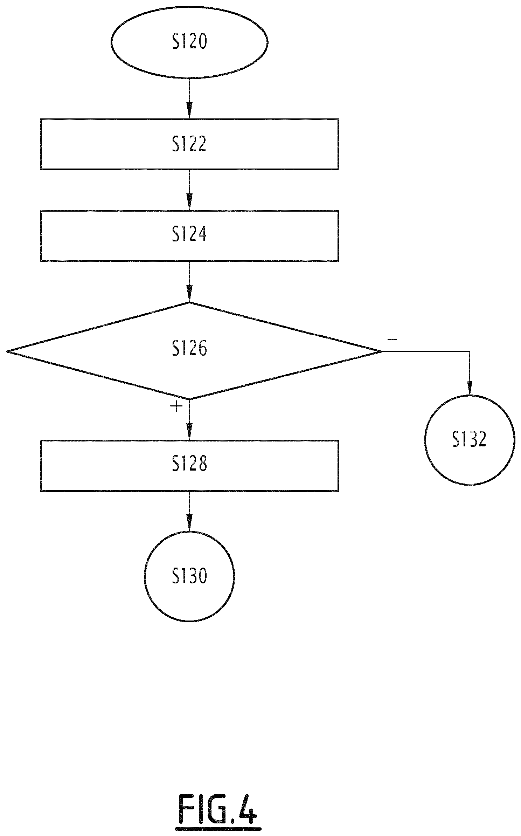

Ensuite, un module logiciel exécutable, tel que le module logiciel 42 précédemment décrit, est créé. Par exemple, lors d'une étape de compilation, on génère automatiquement du code logiciel configuré pour, lorsqu'exécuté par un processeur du contrôleur électronique cible, conduire le processeur à mettre en œuvre un procédé tel que décrit en référence à la figure 4.

L'étape de compilation n'est pas forcément mise en œuvre par le terminal 26 ou par le serveur 30. Dans l'exemple illustré, cette étape est mise en œuvre localement dans l'installation 2, dans le terminal de commande local 20 (« edge controller » en langue anglaise), par exemple lors d'une phase d'installation mise en œuvre par un installateur.

Ainsi, lors d'une étape S110, le terminal 20 reçoit automatiquement les données générées à l'issue des étapes S100 à S104 précédemment décrites. Ces données peuvent comporter le module logiciel 42 sous une forme partiellement compilée. Puis, la compilation est mise en œuvre lors de l'étape S112, pour créer le module logiciel 42. Enfin, lors d'une étape S114, le module logiciel est installé sur le contrôleur 18.

D'autres variantes peuvent cependant être envisagées, par exemples dans lesquelles l'étape S112 de compilation est mise en œuvre par le terminal 26 ou le serveur 50. Le terminal 20 peut alors être omis, de même que son interface 22.

La figure 4 représente un exemple d'un procédé de protection mis en œuvre par les instructions de contrôle 44 pendant l'exécution du module logiciel 42 sur le contrôleur 18.

Initialement, lors d'une étape S120, le contrôleur 18 est démarré.

Le procédé est mis en œuvre en réponse à une requête venant du contrôleur 18 (par exemple venant d'un programme en cours d'exécution sur le contrôleur 18) demandant l'exécution d'une fonction protégée 46 contenue dans le module logiciel 42.

Lors d'une étape S122, un identifiant numérique du contrôleur électronique est automatiquement obtenu, par exemple en faisant appel à la première fonction système 56.

Lors d'une étape S124, une signature numérique est automatiquement calculée à partir de l'identifiant numérique obtenu. Le calcul de la signature numérique est réalisé au moyen d'une fonction de calcul contenue dans le module logiciel, par exemple contenu dans les instructions de contrôle 44.

En pratique, cette fonction de calcul et analogue, et de préférence identique, à la fonction de calcul utilisée lors de la création du module logiciel 42 (ici lors de l'étape S102).

Lors d'une étape S126, la signature numérique calculée est comparée avec une signature prédéfinie stockée dans le module logiciel 42, par exemple stockée dans la zone de stockage 48 du module logiciel 42.

La signature numérique prédéfinie correspond en fait à la signature numérique calculée lors de la création du module logiciel 42 et qui a été préalablement insérée lors de la création du module logiciel (ici lors de l'étape S102).

Selon le résultat de la comparaison, si la signature numérique calculée correspond à la signature numérique prédéfinie, alors l'exécution de la fonction protégée est autorisée (étape S128). Les instructions correspondant à la fonction protégée 46 peuvent alors être exécutées par le processeur du contrôleur 18.

Le procédé peut alors prendre fin (étape S130), jusqu'à sa prochaine exécution au prochain appel à une fonction protégée 46 du module logiciel 42.

En revanche, le résultat de la comparaison, si la signature numérique calculée ne correspond pas à la signature numérique prédéfinie, alors l'exécution de la fonction protégée est refusée (étape S132). Par exemple, l'accès aux instructions correspondant à la fonction protégée 46 est alors interdit et ces instructions ne peuvent pas être exécutées par le processeur du contrôleur 18. Le procédé peut prendre fin, jusqu'à sa prochaine exécution au prochain appel à une fonction protégée 46 du module logiciel 42.

Optionnellement, lors de l'étape S132, un signal d'erreur peut être généré en vue d'un traitement par le système 40, par exemple pour enregistrer l'occurrence de l'erreur dans un journal d'évènements, ou pour transmettre le signal d'erreur à un gestionnaire d'exceptions, ou pour envoyer une alerte à un superviseur.

Dans de nombreux modes de réalisation, lors de l'étape S126, la signature numérique calculée est dite correspondre à la signature numérique prédéfinie si la signature numérique calculée est égale à la signature numérique prédéfinie. Cela est notamment le cas lorsque les signatures numériques sont des valeurs numériques, ou alphanumériques.

Selon des variantes avantageuses mais néanmoins optionnelles, le procédé peut également comporter :
- une étape d'acquisition d'un paramètre additionnel auprès du contrôleur électronique (par exemple pendant l'étape S122) ;
- puis une étape de comparaison (par exemple pendant l'étape S126) du paramètre additionnel acquis avec une valeur de référence du paramètre additionnel stockée dans le module logiciel (par exemple stockée dans la zone 48).

En outre, l'exécution de la fonction protégée est autorisée seulement si, en outre, le paramètre additionnel acquis correspond à la valeur de référence, l'exécution de la fonction protégée étant refusée si le paramètre additionnel acquis ne correspond pas à la valeur de référence. En d'autres termes, dans cette variante, les conditions requises pour autoriser l'exécution de la fonction protégée sont cumulatives.

Selon un exemple avantageux, le paramètre additionnel est une durée de fonctionnement et la valeur de référence du paramètre additionnel est une durée maximale de fonctionnement.

Par exemple, il peut s'agir de la durée de fonctionnement du module logiciel 42, ou de la durée de fonctionnement du contrôleur 18, ou de la durée de fonctionnement de l'installation 2.

Cela permet, par exemple, d'éviter que l'utilisateur continue à utiliser indéfiniment le module logiciel 42 et les fonctions protégées 46 après expiration d'une licence d'utilisation.

En pratique, la valeur de référence du paramètre additionnel peut être stockée dans la zone de stockage 48. Et la valeur du paramètre additionnel peut être acquise en appelant une fonction système (par exemple, la deuxième fonction système 60).

Dans d'autres modes de réalisation qui ne sont pas décrits en détail, le paramètre additionnel pourrait être différent. Il pourrait s'agir d'une clé de licence numérique, ou d'un paramètre équivalent indiquant si une licence d'utilisation accordée à l'utilisateur est toujours valide.

Selon des variantes avantageuses mais néanmoins optionnelles, le procédé peut également comporter une phase d'inhibition temporaire, postérieure au démarrage du contrôleur 18, pendant laquelle l'exécution de la fonction protégée 46 est autorisée même si la signature numérique calculée ne correspond pas à la signature numérique prédéfinie.

Par exemple, postérieurement au démarrage (étape S120), les instructions de contrôle 44 inhibent temporairement la mise en œuvre des étapes S122, S124 et S126.

De préférence, l'inhibition est activée temporairement pendant une courte durée suivant le démarrage du contrôleur 18, ou le démarrage du module 42. La durée de l'inhibition doit rester suffisamment courte pour empêcher un utilisateur d'utiliser librement la fonction protégée 46 ou de contourner les protections mises en place par les instructions de contrôle 44. Par exemple, la durée de l'inhibition est inférieure ou égale à quelques minutes, ou à quelques secondes.

Cette inhibition permet, par exemple, à un utilisateur d'effectuer des opérations de diagnostic et de maintenance sans être entravé par le mécanisme de protection implémenté par les instructions de contrôle 44.

Dans de nombreux cas, toutefois, la phase d'inhibition temporaire peut être omise.

En variante, les étapes des procédés décrits ci-dessus pourraient être exécutées dans un ordre différent. Certaines étapes pourraient être omises. L'exemple décrit ne fait pas obstacle à ce que, dans d'autres modes de réalisation, d'autres étapes soient mises en œuvre conjointement et/ou séquentiellement avec les étapes décrites.

Les modes de réalisation présentés ci-dessus permettent globalement d'empêcher l'utilisation non autorisée de certaines fonctions logicielles dans un automate industriel d'une installation électrique. En autorisant l'exécution des fonctions protégées que sur un ou plusieurs contrôleurs 18 préalablement identifiés et autorisés, les utilisateurs et les tiers sont empêchés de copier ou dupliquer sans autorisation le module logiciel 42.

Et en limitant la protection à seulement certaines fonctions du module logiciel 42, au lieu de protéger l'intégralité du module logiciel, la mise en œuvre du mécanisme de protection est simplifiée. Cela facilite également le travail des utilisateurs lors de l'écriture du programme avant la compilation du module logiciel 42.

Le mécanisme de protection implémenté par les instructions de contrôle 44 est plus facile à mettre en œuvre et plus transparent pour l'utilisateur que des mécanismes connus de protection de logiciels, dans lesquels l'intégralité du programme informatique est protégée au moyen de dispositifs matériels et logiciels, par exemple au moyen d'un dispositif électronique dédié qui doit rester connecté au contrôleur 18.

Les modes de réalisation et les variantes envisagés ci-dessus peuvent être combinés entre eux pour donner naissance à de nouveaux modes de réalisation.

## Revendications

1. Procédé pour protéger l'exécution d'un module logiciel (42) compilé et installé dans un contrôleur électronique (18) d'une installation de distribution d'électricité (2), ce module logiciel comportant des instructions logicielles de contrôle (44) et au moins une fonction protégée (46), ce procédé étant mis en oeuvre par les instructions logicielles de contrôle lorsque le module logiciel est exécuté par le contrôleur électronique (18), suite à une requête du contrôleur électronique visant à exécuter ladite au moins une fonction protégée, ce procédé comprenant :
- obtenir (S122) un identifiant numérique du contrôleur électronique ;
- calculer (S124), au moyen d'une fonction de calcul contenue dans le module logiciel, une signature numérique à partir de l'identifiant numérique obtenu ;
- comparer (S126) la signature numérique calculée avec une signature prédéfinie stockée dans le module logiciel, la signature numérique prédéfinie ayant été préalablement insérée lors de la création du module logiciel à partir de l'identifiant numérique du contrôleur industriel et au moyen d'une fonction de calcul analogue à celle contenue dans le module logiciel ;
- autoriser (S128) l'exécution de la fonction protégée si la signature numérique calculée correspond à la signature numérique prédéfinie, et refuser (S132) l'exécution de la fonction protégée si la signature numérique calculée ne correspond pas à la signature numérique prédéfinie.

2. Procédé selon la revendication 1, dans lequel le procédé comporte également :
- acquérir (S122) un paramètre additionnel auprès du contrôleur électronique ;
- comparer (S126) le paramètre additionnel acquis avec une valeur de référence du paramètre additionnel stockée dans le module logiciel,
et dans lequel l'exécution de la fonction protégée est autorisée (S128) seulement si, en outre, le paramètre additionnel acquis correspond à la valeur de référence, l'exécution de la fonction protégée étant refusée (S132) si le paramètre additionnel acquis ne correspond pas à la valeur de référence.

3. Procédé selon la revendication 2, dans lequel le paramètre additionnel est une durée de fonctionnement, et dans lequel la valeur de référence du paramètre additionnel est une durée maximale de fonctionnement.

4. Procédé selon l'une quelconque des revendications précédentes, dans lequel le procédé comporte une phase d'inhibition temporaire, postérieure au démarrage (S120) du contrôleur électronique, pendant laquelle l'exécution de la fonction protégée est autorisée même si la signature numérique calculée ne correspond pas à la signature numérique prédéfinie.

5. Procédé selon l'une quelconque des revendications précédentes, dans lequel l'identifiant numérique du contrôleur électronique est obtenu au moyen d'une fonction système (56) fournie par le contrôleur électronique.

6. Procédé selon l'une quelconque des revendications précédentes, dans lequel l'identifiant numérique comporte un identifiant matériel, tel qu'un numéro de série, qui identifie de façon unique le contrôleur électronique.

7. Procédé selon l'une quelconque des revendications précédentes, dans lequel la fonction de calcul est une fonction de hachage.

8. Procédé selon l'une quelconque des revendications précédentes, dans lequel le contrôleur électronique (18) est un automate industriel programmable.

9. Procédé pour générer un module logiciel destiné à être déployé sur un contrôleur électronique cible, ce procédé comportant :
- acquérir (S100) un identifiant numérique du contrôleur électronique,
- calculer (S102) une signature à partir de l'identifiant numérique obtenu, le calcul étant effectué au moyen d'une fonction de calcul ;
- enregistrer (S104) la signature dans le module logiciel ;
- enregistrer (S112), dans le module logiciel, du code logiciel configuré pour, lorsqu'exécuté par un processeur du contrôleur électronique cible, conduire le processeur à mettre en oeuvre un procédé conforme à l'une quelconque des revendications précédentes.

10. Module logiciel (42), tel qu'un produit-programme d'ordinateur, comportant du code logiciel comportant des instructions de contrôle et au moins une fonction protégé, les instructions de contrôle étant configurées pour, lorsqu'exécutées par processeur d'un contrôleur électronique d'une installation de distribution d'électricité (2), mettre en oeuvre des étapes comprenant :
- obtenir (S122) un identifiant numérique du contrôleur électronique ;
- calculer (S124), au moyen d'une fonction de calcul contenue dans le module logiciel, une signature numérique à partir de l'identifiant numérique obtenu ;
- comparer (S126) la signature numérique calculée avec une signature prédéfinie stockée dans le module logiciel ;
- autoriser (S128) l'exécution de la fonction protégée si la signature numérique calculée correspond à la signature numérique prédéfinie, et refuser (S132) l'exécution de la fonction protégée si la signature numérique calculée ne correspond pas à la signature numérique prédéfinie.

11. Installation de distribution d'électricité (2), notamment un micro-réseau de distribution d'électricité, comprenant un contrôleur électronique (18) comportant un processeur et un module logiciel (42) conforme à la revendication 10.

12. Système pour générer un module logiciel destiné à être déployé sur un contrôleur électronique cible, ce système étant configuré pour mettre en oeuvre un procédé comportant :
- acquérir (S100) un identifiant numérique du contrôleur électronique,
- calculer (S102) une signature numérique à partir de l'identifiant numérique obtenu, le calcul étant effectué au moyen d'une fonction de calcul ;
- enregistrer (S104) la signature numérique dans le module logiciel ;
- enregistrer (S112), dans le module logiciel, du code logiciel conforme à la revendication 10.

## Patentansprüche

1. Verfahren zum Schutz der Ausführung eines Softwaremoduls (42), das kompiliert und in einer elektronischen Steuerung (18) einer Stromverteilungsanlage (2) installiert ist, wobei dieses Softwaremodul Softwaresteuerungsanweisungen (44) und mindestens eine geschützte Funktion (46) umfasst, wobei dieses Verfahren von den Softwaresteuerungsanweisungen implementiert wird, wenn das Softwaremodul von der elektronischen Steuerung (18) nach einer Anforderung der elektronischen Steuerung, die mindestens eine geschützte Funktion auszuführen, ausgeführt wird, das Verfahren umfassend:
- Erlangen (S122) einer digitalen Kennung der elektronischen Steuerung;
- Berechnen (S124), mittels einer in dem Softwaremodul enthaltenen Berechnungsfunktion, einer digitalen Signatur anhand der erlangten digitalen Kennung;
- Vergleichen (S126) der berechneten digitalen Signatur mit einer vordefinierten Signatur, die in dem Softwaremodul gespeichert ist, wobei die vordefinierte digitale Signatur zuvor bei der Erstellung des Softwaremoduls anhand der digitalen Kennung der industriellen Steuerung und mittels einer Berechnungsfunktion analog zu jener, die in dem Softwaremodul enthalten ist, eingefügt wurde;
- Autorisieren (S128) der Ausführung der geschützten Funktion, wenn die berechnete digitale Signatur der vordefinierten digitalen Signatur entspricht und Verweigern (S132) der Ausführung der geschützten Funktion, wenn die berechnete digitale Signatur nicht der vordefinierten digitalen Signatur entspricht.

2. Verfahren nach Anspruch 1, wobei das Verfahren auch Folgendes umfasst:
- Erfassen (S122) eines zusätzlichen Parameters der elektronischen Steuerung;
- Vergleichen (S126) des erfassten zusätzlichen Parameters mit einem Referenzwert des zusätzlichen Parameters, der in dem Softwaremodul gespeichert ist, und wobei die Ausführung der geschützten Funktion nur dann autorisiert (S128) wird, wenn ferner der erfasste zusätzliche Parameter dem Referenzwert entspricht, wobei die Ausführung der geschützten Funktion verweigert (S132) wird, wenn der zusätzlich erfasste Parameter nicht dem Referenzwert entspricht.

3. Verfahren nach Anspruch 2, wobei der zusätzliche Parameter eine Betriebsdauer ist, und wobei der Referenzwert des zusätzlichen Parameters eine maximale Betriebsdauer ist.

4. Verfahren nach einem der vorherigen Ansprüche, wobei das Verfahren eine temporäre Sperrphase nach dem Start (S120) der elektronischen Steuerung umfasst, während der die Ausführung der geschützten Funktion auch dann autorisiert ist, wenn die berechnete digitale Signatur nicht der vordefinierten digitalen Signatur entspricht.

5. Verfahren nach einem der vorherigen Ansprüche, wobei die digitale Kennung der elektronischen Steuerung mittels einer Systemfunktion (56) erlangt wird, die von der elektronischen Steuerung bereitgestellt wird.

6. Verfahren nach einem der vorherigen Ansprüche, wobei die digitale Kennung eine materielle Kennung wie beispielsweise eine Seriennummer umfasst, die die elektronische Steuerung eindeutig identifiziert.

7. Verfahren nach einem der vorherigen Ansprüche, wobei die Steuerungsstrategie eine Hashfunktion ist.

8. Verfahren nach einem der vorherigen Ansprüche, wobei die elektronische Steuerung (18) eine programmierbare industrielle Steuerung ist.

9. Verfahren zum Erzeugen eines Softwaremoduls, das auf einer elektronischen Zielsteuerung eingesetzt werden soll, das Verfahren umfassend:
- Erfassen (S100) einer digitalen Kennung der elektronischen Steuerung,
- Berechnen (S102) einer Signatur anhand der erlangten digitalen Kennung, wobei die Berechnung mittels einer Berechnungsfunktion erfolgt;
- Registrieren (S104) der Signatur in dem Softwaremodul;
- Registrieren (S112) von Softwarecode in dem Softwaremodul, der konfiguriert ist, um, wenn er von einem Prozessor der elektronischen Zielsteuerung ausgeführt wird, den Prozessor zu veranlassen, ein Verfahren nach einem der vorherigen Ansprüche durchzuführen.

10. Softwaremodul (42), wie beispielsweise ein Computerprogrammprodukt, umfassend Softwarecode, der Steuerungsanweisungen und mindestens eine geschützte Funktion umfasst, wobei die Steuerungsanweisungen konfiguriert sind, um, wenn sie von einem Prozessor einer elektronischen Steuerung einer Stromverteilungsanlage (2) ausgeführt werden, Schritte durchzuführen, die Folgendes umfassen:
- Erlangen (S122) einer digitalen Kennung der elektronischen Steuerung;
- Berechnen (S124), mittels einer in dem Softwaremodul enthaltenen Berechnungsfunktion, einer digitalen Signatur anhand der erlangten digitalen Kennung;
- Vergleichen (S126) der berechneten digitalen Signatur mit einer vordefinierten Signatur, die in dem Softwaremodul gespeichert ist;
- Autorisieren (S128) der Ausführung der geschützten Funktion, wenn die berechnete digitale Signatur der vordefinierten digitalen Signatur entspricht und Verweigern (S132) der Ausführung der geschützten Funktion, wenn die berechnete digitale Signatur nicht der vordefinierten digitalen Signatur entspricht.

11. Stromverteilungsanlage (2), insbesondere ein Mikro-Stromverteilungsnetz, umfassend eine elektronische Steuerung (18), die einen Prozessor und ein Softwaremodul (42) nach Anspruch 10 aufweist.

12. System zum Erzeugen eines Softwaremoduls, das dazu bestimmt ist, auf einer elektronischen Zielsteuerung eingesetzt zu werden, wobei das System konfiguriert ist, um ein Verfahren durchzuführen, das Folgendes umfasst:
- Erfassen (S100) einer digitalen Kennung der elektronischen Steuerung,
- Berechnen (S102) einer digitalen Signatur anhand der erlangten digitalen Kennung, wobei die Berechnung mittels einer Berechnungsfunktion erfolgt;
- Speichern (S104) der digitalen Signatur in dem Softwaremodul;
- Registrieren (S112), in dem Softwaremodul, des Softwarecodes gemäß Anspruch 10.

## Claims

1. A method for protecting the execution of a software module (42) compiled and installed in an electronic controller (18) of an electricity distribution installation (2), this software module comprising control software instructions (44) and at least one protected function (46), this method being implemented by the control software instructions when the software module is executed by the electronic controller (18), in response to a request from the electronic controller to execute said at least one protected function, this method comprising:
- obtaining (S122) a digital identifier of the electronic controller;
- calculating (S124), by means of a calculation function contained in the software module, a digital signature from the digital identifier obtained;
- comparing (S126) the calculated digital signature with a predefined signature stored in the software module, the predefined digital signature having been previously inserted when the software module was created, on the basis of the digital identifier of the industrial controller and by means of a calculation function similar to that contained in the software module;
- authorising (S128) the execution of the protected function if the calculated digital signature matches the predefined digital signature, and denying (S132) the execution of the protected function if the calculated digital signature does not match the predefined digital signature.

2. The method according to claim 1, wherein the method comprises:
- acquiring (S122) an additional parameter from the electronic controller;
- comparing (S126) the acquired additional parameter with an additional parameter reference value stored in the software module,
and wherein the execution of the protected function is authorised (S128) only if, in addition, the acquired additional parameter matches the reference value, the execution of the protected function being denied (S132) if the acquired additional parameter does not match the reference value.

3. The method according to claim 2, wherein the additional parameter is an operating time, and wherein the reference value of the additional parameter is a maximum operating time.

4. The method according to any one of the preceding claims, wherein the method comprises a temporary inhibition phase, subsequent to the start-up (S120) of the electronic controller, during which the execution of the protected function is authorised even if the calculated digital signature does not match the predefined digital signature.

5. The method according to any one of the preceding claims, wherein the digital identifier of the electronic controller is obtained by means of a system function (56) provided by the electronic controller.

6. The method according to any of the preceding claims, wherein the digital identifier comprises a hardware identifier, such as a serial number, which uniquely identifies the electronic controller.

7. The method according to any one of the preceding claims, wherein the calculation function is a hash function.

8. The method according to any of the preceding claims, wherein the electronic controller (18) is a programmable logic controller.

9. A method for generating a software module for deployment on a target electronic controller, the method comprising:
- acquiring (S100) a digital identifier of the electronic controller,
- calculating (S102) a signature from the digital identifier obtained, the calculation being performed by means of a calculation function;
- storing (S104) the signature in the software module ;
- storing (S112), in the software module, software code configured to, when executed by a processor of the target electronic controller, cause the processor to implement a method in accordance with any of the preceding claims.

10. A software module (42), such as a computer program product, comprising software code comprising control instructions and at least one protected function, the control instructions being configured so as, when executed by a processor of an electronic controller of an electricity distribution installation (2), to implement steps comprising:
- obtaining (S122) a digital identifier of the electronic controller;
- calculating (S124), by means of a calculation function contained in the software module, a digital signature from the digital identifier obtained;
- comparing (S126) the calculated digital signature with a predefined signature stored in the software module;
- authorising (S128) the execution of the protected function if the calculated digital signature matches the predefined digital signature, and denying (S132) the execution of the protected function if the calculated digital signature does not match the predefined digital signature.

11. An electricity distribution installation (2), in particular an electricity distribution microgrid, comprising an electronic controller (18) comprising a processor and a software module (42) in accordance with claim 10.

12. A system for generating a software module for deployment on a target electronic controller, said system being configured to implement a method comprising:
- acquiring (S100) a digital identifier of the electronic controller,
- calculating (S102) a digital signature from the digital identifier obtained, the calculation being performed by means of a calculation function;
- storing (S104) the digital signature in the software module;
- storing (S112), in the software module, software code in accordance with claim 10.
